Europäisches Patentamt

European Patent Office

Office européen des brevets

(19)

(11) Publication number: **0 086 615**
**B1**

(12) **EUROPEAN PATENT SPECIFICATION**

(45) Date of publication of patent specification: **22.05.85**

(21) Application number: **83300606.7**

(22) Date of filing: **07.02.83**

(51) Int. Cl.⁴: **B 22 C 1/00, B 22 C 1/10, B 22 C 1/16, B 22 C 1/22, B·22 C 5/04, C 08 J 3/24**

(54) **Foundry moulds and cores.**

(30) Priority: **09.02.82 GB 8203686**

(43) Date of publication of application:
**24.08.83 Bulletin 83/34**

(45) Publication of the grant of the patent:
**22.05.85 Bulletin 85/21**

(84) Designated Contracting States:
**AT BE CH DE FR GB IT LI NL SE**

(56) References cited:
**DE-A-3 020 089**
**DE-C-2 239 835**
**GB-A-1 257 181**
**US-A-4 166 799**

(73) Proprietor: **BORDEN (UK) LIMITED**
**North Baddesley**
**Southampton SO5 9ZB (GB)**

(72) Inventor: **Lemon, Peter Herbert Richard Bryan**
**Pandale Newton Road Sherfield English**
**Nr. Romsey Hampshire (GB)**
Inventor: **Railton, Jeffrey David**
**12 Bracken Lane Shirley Warren Shirley**
**Southampton Hampshire (GB)**
Inventor: **Ludlam, Peter Raymond**
**Merryhill Shootash**
**Romsey Hampshire (GB)**
Inventor: **Reynolds, Timothy John**
**16 Percy Road Shirley**
**Southampton Hampshire (GB)**

(74) Representative: **Pennant, Pyers et al**
**Stevens, Hewlett & Perkins 5 Quality Court**
**Chancery Lane**
**London, WC2A 1HZ (GB)**

Courier Press, Leamington Spa, England.

**Description**

This invention relates to the manufacture of foundry moulds and cores which do not evolve pungent acid gases on thermal decomposition. More particularly it refers to a method of making moulds and cores of this type rapidly at ambient temperature.

Phenol formaldehye and phenol formaldehyde/furfuryl alcohol condensation products catalysed with strong acids such as sulphuric acid, paratoluene sulphonic acid, are well known as binders for sand in the production of foundry moulds and cores. However, they have the disadvantage that pungent fumes of sulphur dioxide are evolved on thermal decomposition.

The use of alkaline phenolic resins catalysed with esters has been suggested in Japanese Patent Publication No. 130627/1975 and is the subject of our co-pending GB—A Specification 2059972 and EP—A 0085512. The use of such binder systems enables the manufacture of foundry moulds and cores which do not evolve pungent acid gases on mixing or during casting. Further, by suitable selection of resins and ester catalysts rapid hardening at ambiemnt temperature can be achieved. However, to obtain such results on a large scale it is necessary to use specialized rapid mixing equipment such as that described in British Patent Specifications 1,257,181 and 1,369,445 of Baker Perkins.

The present invention is based on the discovery that the use of esters as catalysts for alkaline phenolic resins in the manufacture of foundry moulds and cores can be adapted to a gassing system which is capable of rapid cure at ambient temperature. The use of gassing to promote curing of binders for foundary moulds and cores is knwon. The major systems which are or have been industrially used are as follows:

a) The "Carbon Dioxide Process" in which $CO_2$ is passed through a mixture of sand and sodium silicate. However, the resultant cores or moulds are very sensitive to water and lose strength "damp back" on storage, will not accept aqueous washes and show very poor breakdown on casting. It is necessary to add breakdown agents such as sucrose to promote better breakdown. Over-gassing produces very poor strengths.

b) The "Sulphur Dioxide Process" disclosed by SAPIC in GB—A—1,411,975 which uses (1) a peroxide which is dangerous to store and dispense, particularly in a foundry environment, and (2) pungent $SO_2$ gas which has a low Threshold Limit Value (TLV) and is unpleasant to handle.

c) The "Isocure" process disclosed by Ashland in GB—A—1,190,644 which uses a benzilic ether phenolic polyol and methylene diphenyl diisocyanante. The reaction between the polyol and diisocyanate is accelerated by gassing with triethylamine or dimethyl ethylamine. The diisocyanates have very low TLV's and react with water preferentially over the polyol so that it is necessary to use dry sand and dry air to convey the sand/binder mix into core box or mould. The amines have relatively low TLV's and their toxicology is not well understood. Cured cores tend to absorb water and lose some strength on storage. Certain casting defects are observed with "Isocure" cores/moulds, e.g. "pinholing" caused by the nitrogen content of the binder which reduces to ammonia in the casting environment dissolves in the molten metal and is evolved as small blow holes on cooling; "graphitic defect" which is a deposit of graphite carbon which collects in flakes on the surface of the casting; and "finning" or "veining" caused by the mould or core cracking under the expansion stressed during casting and molten metal running into the cracks.

The present invention enables the rapid and efficient production of foundry moulds and cores without the disadvantages of the prior arts as described above.

Accordingly, the present invention provides a method of making a foundry mould or core which method comprises mixing a granular refractory material with from 0.5 to 8% of a binder which comprises an aqueous solution, having a solids content of from 50 to 75% by weight, of a potassium alkali phenol-formaldehyde resin having the following characteristics:

a) a weight average molecular weight ($\overline{M}_w$) of from 600 to 1500;

b) a formaldehyde: phenol molar ratio of from 1.2:1 to 2.6:1; and

c) a KOH: phenol molar ratio of from 0.2:1 to 1.2:1 the binder including 0.05 to 3% by weight on the weight of the resin solution of at least one silane, forming the mixture in a vented core or mould box and gassing the formed mixture with at least one $C_1$ to $C_3$ alkykl formate to cure the binder.

The granular refractory materials used in the present invention may be any of the refractory materials employed in the foundry industry for the production of moulds and cores, such as silica sand, chormite sand, zircon or olivine sand. The compositions of the invention have the particular advantage that the difficulties commonly associated with the bonding of sands of alkaline reaction such as olivine and chromite or beach sands containing shell fragments and which arise from the neutralization or partial neutralization of the acid catalyst used, are completely overcome since in the invention the binder is cured under alkaline conditions. The invention is therefore, of particular utility where it is necessary or desirable to employ alkaline sands.

The nature of the phenol-formaldehyde resin used is an important feature of the present invention. There are several features of the resin which are important. Since the present invention is directed to cold set techniques, the resin binder will be used as an aqueous solution of the resin. The solids content of the aqueous solution is in the range 50 to 75% by weight. Solids contents below 50% are not used because they contain too much water which reduces the effectiveness of the binder. Solids contents above 75%, are not used because the viscosity becomes too high.

The phenol-formaldehyde resins used in this invention have a weight average molecular weight ($\overline{M}_w$)

2

of from 600 to 1500. Resins with $\overline{M}_w$ outside this range give products which are relatively weak or build up strength more slowly. We have, to date, obtained best results using resins having $\overline{M}_w$ in the range 700 to 1100.

The resins used in this invention are potassium alkaline phenol-formaldehyde resins by which is meant that the alkali in the resin is potassium alkali. This alkali will usually be present in the resin during manufacture but can be added to the resin subsequently as KOH, preferably in aqueous solution of suitable strength. The alkalinity of the resin is expressed in terms of its KOH content and specifically by the molar ratio of KOH to the phenol in the resin. Other alkalis are not expressly excluded and may be present in minor amounts but will not be specifically added because they give products having lower strength.

The molar ratio of KOH: phenol in the resin solution is in the range 0.2:1 to 1.2:1 preferably 0.3:1 to 1:1. Outside this range the products have relatively poor strength and, above the top range limit, the resin is hazardously alkaline. We have obtained best results using resin solutions having a KOH: phenol molar ratio in the range of from 0.4:1 to 0.6:1; and

The resins used have a formaldehyde to phenol molar ratio of from 1.2:1 to 2.6:1, preferably 1.5:1 to 2.2:1. Lower ratios are not used because the resins are relatively unreactive. Higher ratios are not used because the resins produced contain undesirably high levels of unreacted formaldehyde and give products having lower strength.

It is a subsidiary aspect of this invention that the resin used satisfies the following criteria:

a) $\overline{M}_w$ from 700 to 1100;

b) KOH: phenol molar ratio of from 0.4:1 to 0.6:1; and

c) formaldehyde: phenol molar ratio 1.5:1 to 2.2:1

A silane is included in the binder to improve strength. Amounts as low as 0.05% by weight on the weight of resin solution provide a significant improvement in strength. Increasing the amount of silane gives greater improvements in strength up to about 0.6% by weight on the resin solution. Higher silane concentrations are not preferrred because of added cost. Further, because the silane typically used is γ-aminopropyltriethoxy silane which contains nitrogen, use of excess silane may increase the risk of pinholing defects and for these reasons amounts in excess of 3% by weight on the resin solution are not used.

The binder and particulate refractory material can be mixed and formed by conventional techniques. The vented core and mould boxes used can also be of conventional type, as are used in prior art gassing systems. The binder is cured, according to the present invention, by gassing with a $C_1$ to $C_3$ alkyl formate, very preferably methyl formate. The alkyl formate curing catalyst will not usually be used as a pure gas but as a vapour or aerosol in an inert carrier gas. By inert carrier gas we means a gas which does not react with the formate catalyst or have an adverse effect on the curing reaction or the properties of the product. Suitable examples include air, nitrogen or carbon dioxide.

The gassing catalyst is a $C_1$ to $C_3$ alkyl formate preferably dispersed in a carrier gas as vapour or an aerosol. Other esters e.g. formate esters of higher alcohols such as butyl formate, and esters of $C_1$ to $C_3$ alcohols with higher carboxylic acids such as methyl and ethyl acetates, are not effective as gassing catalysts. Methyl formate is significantly more active as a catalyst than ethyl formate which is better than the propyl formates. The reasons for the catalytic activity of the $C_1$ to $C_3$ alkyl formates and, within this group, the marked superiority of methyl formate, are not clear. The relative volatility of these compounds enables their use as gassing catalysts. This is especially true of methyl formate which is a volatile liquid having a boiling point at atmospheric pressure of 31.5°C. At ambeint temperatures (below 31.5°C), typically 15 to 25°C, it is sufficiently volatile that passing carrier gas through liquid methyl formate (maintained at ambeint temperature) gives a concentration of methyl formate vapour in the carrier gas sufficient to act as catalyst to cure the binder. Ethyl and the propyl formates are less volatile than the methyl ester, having boiling points in the range 54 to 82°C at atmospheric pressure.

In order to entrain sufficient of these esters in the gas phase to enable effective catalysis, we have found it appropriate to heat the esters to near boiling point and use a stream of carrier gas preheated to e.g. 100°C.

An alternative to true vaporisation is to form an aerosol in the carrier gas. Methyl formate is so volatile as to make this impractical. Using ethyl and propyl formates it is desirable to pre-heat them to enhance even distribution in the core or mould during gassing.

As is indicated above, methyl formate is the most active catalyst and, by virtue of its volatility, is the easiest to use. Accordingly, the use of methyl formate in a stream of inert carrier gas as the gassing catalyst forms a particular aspect of this invention. A further practical advantage of these formate esters, especially methyl formate is their relative low toxicity and the fact that their toxicity is well understood.

The concentration of the formate catalyst in the carrier gas is preferably at least 0.2% by volume and typically from 0.5 to 5% by volume. The total amount of catalyst used will depend upon the particular conditions employed but will typically be from 5 to 60%, preferably from 15 to 35%, by weight on the weight of the resin solution. The time required for adequate gassing depends on the size and complexity of the core or mould and on the particular resin used. It can be as short as 0.1 secs but more usually is in the range 1 sec to 1 min. Longer times e.g. up to 5 mins can be used if desired or for large moulds or cores. After gassing, the core or mould is stripped from the box. Sufficient time must elapse to permit the strength of the mould or core to build up to enable stripping without damage. Production speed can be enhanced by purging the mould or core box with a suitable inert gas such as air which removes residual catalyst vapour and water and other by-products of the curing reaction.

The amount of resin solution used as binder is from 0.5 to 8%, preferably 1 to 3%, by weight on the weight of the refractory particulate material. Use of lower amounts of binder gives cores of poor strength. Higher amounts of binder give no significant advantage and give generally poorer breakdown on casting and increase the difficulty of sand recovery.

The following Examples illustrate the invention.

The techniques used in the Examples are described below:

Manufacture of phenol formaldehyde resin solutions

100% phenol was dissolved in 50% aqueous KOH in an amount corresponding to the desired KOH: phenol molar ratio (from 0.2 to 1.2). The solution was heated to reflux and 50% aqueous formaldehyde was added slowly, whilst maintaining reflux, in an amount corresponding to the desired formaldehyde: phenol molar ratio (1.6, 1.8 or 2.0). The reaction mixture was maintained under reflux until it attained a predetermined viscosity corresponding to the desired value of $\overline{M}_w$. (If desired the solids content can be adjusted by distillation, but this is not usually necessary. This is a further advantage of the invention. In some cases minor amounts of KOH solution were added to adjust the KOH: phenol ratio, but this would not be necessary in full scale production.) The resin solution was cooled to 40°C and 0.4% by weight on the weight of the resin solution of γ-aminopropyl triethoxy silane was added.

Testing of resins

a) *viscosity*—measured using an Ostwald (U-tube) viscometer at 25°C.

b) *solids content*—measured by heating a weighed sample (2.0 ± 0.1 g) in an air circulating oven for 3 hr at 100°C.

c) *Molecular weight ($\overline{M}_m$*—measured using gel permeation chromatography. Samples were prepared by precipitating resin from the resin solution by adding $H_2SO_4$; separating, washing and drying the precipitate and dissolving it in tetrahydrofuran.

Preparation of Foundry Sand Core Mix

1 kg of the selected sand was charged into a Fordath laboratory core mixer and mixed for 2 mins, with 20 g phenol-formaldehyde resin prepared as described above. The mix was discharged into a tin and sealed immediately to prevent evaporation of water.

Preparation of test foundry cores

5 × 5 cm cylinder compression test pieces were prepared by the standard procedure recommended by I.B.F. working party P but using a perforated bottom plate to the cylinder with a recess which could be connected to a source of negative pressure. The top of the cylinder was sealed with another perforated plate connected to a bubbler containing liquid methyl formate at ambient temperature. When vacuum was applied to the bottom plate air was bubbled through the methyl formate and the ester vapour conveyed in the air stream through the sand resin mix in the cylinder core box. Compression strength was determined on the resultant cores after storing at 20°C, 50% relative humidity for 1 min, 5 mins, 1 hr. 2 hrs. 3 hrs. and 24 hrs. Initial tests indicated that 30 secs. was suffient time to produce the optimum strength and this was used as a standard in the Examples below.

Example 1

Test cores were made using solutions of resins having the following properties:

| | |
|---|---|
| formaldehyde: phenol molar ratio | 2.0 |
| KOH: phenol molar ratio | from 0.4 to 0.8 |
| $\overline{M}_w$ | 960 or 1000 |
| Solids content | 63.5% |

0.4% by weight on the resin solution of γ-aminopropyltriethoxy silane was added. The sand used was Chelford 50 and the amount of resin was 2% by weight resin solution on the sand. The results are set out in Tables 1 and 2. Table 1 gives the results for resins with $\overline{M}_w$ = 960 and Table 2 for resins with $\overline{M}_w$ = 1000. The data in the table show that cores of adequate strength can be made but that the strength falls off somewhat at KOH: phenol ratios greater than 0.6.

4

# 0 086 615

TABLE 1

| Test No. | 1 | 2 | 3 | 4 | 5 |
|---|---|---|---|---|---|
| KOH:Phenol | 0.4 | 0.5 | 0.6 | 0.7 | 0.8 |
| Viscosity (cP) | 500 | 390 | 313 | 250 | — |
| Compression Strength (MPa) | | | | | |
| 1 min | 1.2 | 2.2 | 2.6 | 2.6 | 2.9 |
| 5 min | 1.9 | 3.6 | 3.1 | 3.0 | 3.0 |
| 1 hr | 2.2 | 3.4 | 3.5 | 3.2 | 3.0 |
| 3 hr | 2.1 | 3.9 | 4.0 | 3.5 | 3.1 |
| 24 hr | 3.0 | 4.3 | 4.8 | 3.2 | 2.2 |

TABLE 2

| Test No. | 6 | 7 | 8 | 9 |
|---|---|---|---|---|
| KOH:Phenol | 0.4 | 0.5 | 0.6 | 0.7 |
| Viscosity (cP) | 688 | 500 | 375 | — |
| Compression Strength (MPa) | | | | |
| 1 min | 1.7 | 2.4 | 2.9 | 2.9 |
| 5 min | 2.4 | 3.2 | 3.2 | 3.3 |
| 1 hr | 2.4 | 3.4 | 3.7 | 3.6 |
| 3 hr | 3.2 | 4.1 | 3.2 | 3.4 |
| 24 hr | 4.4 | 4.8 | 3.9 | 2.9 |

## Example 2

Test cores were made using solutions of resin having the following properties:

| | |
|---|---|
| formaldehyde: phenol molar ratio | 2.0 |
| KOH: phenol molar ratio | 0.65 |
| $\overline{M}_w$ | from 718 to 1050 |
| Solids content | 66% |

0.4% by weight λ-aminopropyltriethoxy silane was added to the resin solution. The sand used was Chelford 50 and the amount of resin solution used was 2% by weight on the sand. The experiment was repeated using similar solutions to which 50% KOH solution was added to increase the KOH: phenol ratio to 0.85. The solids contents of these resin solutions were 64%. The results are set out in Table 3. The data for the resins with KOH: phenol =0.65 is in the (a) columns and for resins with KOH: phenol=0.85 in the (b) columns. As in Example 1 the use of higher KOH: phenol ratios gives inferior results especially at the higher values of $\overline{M}_w$.

5

TABLE 3

| Test No. | 10 | | 11 | | 12 | | 13 | |
|---|---|---|---|---|---|---|---|---|
| $\overline{M}_W$ | 718 | | 849 | | 966 | | 1050 | |
| | a | b | a | b | a | b | a | b |
| KOH: phenol | 0.65 | 0.85 | 0.65 | 0.85 | 0.65 | 0.85 | 0.65 | 0.85 |
| Solids (%) | 66 | 64 | 66 | 64 | 66 | 64 | 66 | 64 |
| Viscosity (cP) | 107 | 81 | 220 | 111 | 320 | 144 | 405 | 167 |
| Compression Strength (MPa) | | | | | | | | |
| 1 min | 2.7 | 2.3 | 2.9 | 2.2 | 2.6 | 2.0 | 1.9 | 2.0 |
| 5 min | 3.4 | 2.7 | 3.3 | 2.6 | 3.0 | 1.1 | 2.2 | 2.0 |
| 1 hr | 3.0 | 2.7 | 3.5 | 2.7 | 2.7 | 2.2 | 2.2 | 2.0 |
| 3 hr | 3.6 | 3.2 | 3.5 | 2.6 | 2.9 | 1.7 | 1.9 | 2.0 |
| 24 hr | 4.5 | 2.9 | 3.5 | 1.1 | 1.8 | 0.8 | 1.2 | 0.9 |

Example 3

Resins with varying properties were used to make test cores as decribed above. The sand used was Chelford 50, the amount of resin solution was 2% by weight on the sand and all the resin solutions contained 0.4% by weight λaminopropyltriethoxy silane. The results are set out in Table 4.

TABLE 4

| Test No. | 14 | 15 | 16 | 17 | 18 | 19 | 20 | 21 |
|---|---|---|---|---|---|---|---|---|
| $\overline{M}_W$ | 850 | 850 | 850 | 1000 | 1000 | 1000 | 1000 | 1000 |
| KOH:Phenol | 0.72 | 0.72 | 0.45 | 0.34 | 0.57 | 0.68 | 0.85 | 1.02 |
| formaldehyde: phenol | 1.6 | 1.6 | 1.6 | 2.0 | 2.0 | 2.0 | 2.0 | 2.0 |
| Solids (%) | 60.2 | 66.2 | 65.4 | 64.0 | 64.0 | 64.0 | 64.0 | 64.0 |
| Viscosity (cP) | 277 | 414 | 600 | — | — | — | 150 | — |
| Compression Strength (MPa) | | | | | | | | |
| 1 min | 2.4 | 2.3 | 1.8 | 0.9 | 2.7 | 2.5 | 2.3 | 1.6 |
| 5 min | 2.5 | 2.4 | 2.5 | 2.7 | 2.8 | 2.7 | 2.4 | 1.8 |
| 1 hr | 2.5 | 2.7 | 2.0 | 2.3 | 2.8 | 2.8 | 2.4 | 2.0 |
| 3 hr | 2.5 | 3.2 | 2.1 | 2.2 | 3.9 | 3.2 | 2.3 | — |
| 24 hr | 1.2 | 3.0 | 3.5 | 3.1 | 4.5 | 2.2 | 1.8 | 1.9 |

**Claims**

1. A method of making a foundry mould or core which method comprises mixing a granular refractory material with from 0.5 to 8% by weight on the weight of the said material of a binder which comprises

(i) an aqueous solution, having a solids content of from 50 to 75% by weight of a potassium alkali phenol-formaldehyde resin having the following characteristics:—

a) a weight average molecular weight ($M_w$) of from 600 to 1500;

b) a formaldehyde: phenol molar ratio of from 1.2:1 to 2.6:1, and

c) a KOH: phenol molar ratio of from 0.2:1 to 1.2:1, and

(ii) at least one silane in an amount of from 0.05 to 3% by weight on the weight of the resin solution, forming the mixture in a vented core or mould box and gassing the formed mixture with at least one $C_1$ to $C_3$ alkyl formate to cure the binder.

2. A method according to claim 1, wherein the refractory material is silica sand, quartz, chromite sand, zircon, olivine sand, beach sands containing shell fragments or mixtures thereof.

3. A method according to either claim 1 or claim 2, wherein the $M_w$ of the resin is from 700 to 1100.

4. A method according to any one of claims 1 to 3, wherein the resin used has a molar ratio of KOH: phenol in the range of from 0.4:1 to 0.6:1.

5. A method according to any one of claims 1 to 4, wherein the resin used has a molar ratio of formaldehyde: phenol in the range of from 1.5:1 to 2.2:1.

6. A method according to any one of claims 1 to 5, wherein the granular refractory material is mixed with from 1 to 3% of the binder.

7. A method according to any one of claims 1 to 6, wherein the mixture is gassed with the $C_1$ to $C_3$ alkyl formate in an amount of from 5 to 60% by weight based on the weight of the resin solution.

8. A method according to claim 7, wherein the mixture is gassed with the $C_1$ to $C_3$ alkyl formate in an amount of from 15 to 35% by weight based on the weight of the resin solution.

9. A method according to any one of claims 1 to 8, wherein the $C_1$ to $C_3$ alkyl formate is dispersed in a carrier gas.

10. A method according to claim 9, wherein the concentration of the $C_1$ to $C_3$ alkyl formate in the carrier gas is from 0.5 to 5% by volume.

11. A method according to any one of claims 1 to 10, wherein the $C_1$ to $C_3$ alkyl formate is methyl formate.

**Patentansprüche**

1. Verfahren zur Herstellung einer Giessform oder eines Giesskerns, dadurch gekennzeichnet, dass man ein körniges feuerfestes Material mit 0.5 bis 8 Gew.%, bezogen auf das Gewicht des Materials, eines Binders mischt, wobei der Binder umfasst:

(i) eine wässrige Lösung mit einem Feststoffgehalt von 50 bis 75 Gew.% eines Kalium-alkali-Phenol-Formaldehyd-Harzes mit den folgenden Charakteristika:

(a) einem gewichtsdurchschnittlichen Molekulargewicht ($M_w$) von 600 bis 1.500,

(b) einem Formaldehyd:Phenol Molverhältnis von 1,2:1 bis 2,6:1, und

(c) einem KOH:Phenol Molverhältnis von 0,2:1 bis 1,2:1; und

(ii) wenigstens ein Silan in einer Menge von 0,05 bis 3 Gew.%, bezogen auf das Gewicht der Harzlösung, dass man die Mischung in einem belüfteten Kernoder Formwerkzeug formt und die geformte Mischung zum Härten des Binders mit wenigstens einem $C_{1-3}$-Alkylformiat begast.

2. Verfahren gemäss Anspruch 1, dadurch gekennzeichnet, dass das feuerfeste Material aus Siliciumdioxidsand, Quarz, Chromitsand, Zirkon, Olivinsand, Strandsand mit Muschelfragmenten oder Mischungen daraus besteht.

3. Verfahren gemäss Anspruch 1 oder Anspruch 2, dadurch gekennzeichnet, dass $M_w$ des Harzes 700 bis 1.100 ist.

4. Verfahren gemäss einem der Ansprüche 1 bis 3, dadurch gekennzeichnet, dass das Verwendete Harz ein Molverhältnis von KOH: Phenol im Bereich von 0,4:1 bis 0,6:1 hat.

5. Verfahren gemäss einem der Ansprüche 1 bis 4, dadurch gekennzeichnet, dass das verwendete Harz ein Molverhältnis von Formaldehyd:Phenol im Bereich von 1,5:1 bis 2,2:1 hat.

6. Verfahren gemäss einem der Ansprüche 1 bis 5, dadurch gekennzeichnet, dass das körnige feuerfeste Material mit 1 bis 3% des Binders vermischt wird.

7. Verfahren gemäss einem der Ansprüche 1 bis 6, dadurch gekennzeichnet, dass die Mischung mit dem $C_{1-3}$-Alkylformiat in einer Menge von 5 bis 60 Gew.%, bezogen auf das Gewicht der Harzlösung, begast wird.

8. Verfahren gemäss Anspruch 7, dadurch gekennzeichnet, dass die Mischung mit dem $C_{1-3}$-Alkylformiat in einer Menge von 15 bis 35 Gew.%, bezogen auf das Gewicht der Harzlösung, begast wird.

9. Verfahren gemäss einem der Ansprüche 1 bis 8, dadurch gekennzeichnet, dass das $C_{1-3}$-Alkylformiat in einem Trägergas dispergiert ist.

10. Verfahren gemäss Anspruch 9, dadurch gekennzeichnet, dass die Konzentration des $C_{1-3}$-Alkylformiates in dem Trägergas 0,5 bis 5 Vol.% beträgt.

**0 086 615**

11. Verfahren gemäss einem der Ansprüche 1 bis 10, dadurch gekennzeichnet, dass das C$_{1-3}$-Alkylformiat Methylformiat ist.

## Revendications

1. Procédé pour la fabrication d'un moule ou d'un noyau de fonderie consistant à mélanger une matière réfractaire granulée avec 0,5 à 8% en poids par rapport au poids de cette matière, d'un liant comprenant:

(1) une solution aqueuse ayant une teneur en solides comprise entre 50 et 75% en poids d'une résine phénol-formaldéhyde alcaline par du potassium présentant les caractéristiques suivantes;

a) un poids moléculaire moyen en poids ($\overline{M}_w$) compris entre 600 et 1500;

b) un rapport molaire formaldéhyde/phénol compris entre 1,2/1 et 2,6/1; et

c) un rapport molaire KOH/phénol compris entre 0,2/1 et 1,2/1; et

(2) au moins un silane à un taux compris entre 0,05 et 3% en poids par rapport à la solution de résine, à donner une forme au mélange dans une boite à noyau permable aux gaz ou une boite de moule, et à traiter le mélange formé, par un moins un formiate d'alkyle C$_1$—C$_3$ pour faire durcir le liant.

2. Procédé selon la revendication 1, dans lequel la matière réfractaire est du sable de silice, du quartz, du sable de chromite, du zircon, du sable d'olivine, un sable de plage contenant des fragments de coquillages ou un mélange de ceux-ci.

3. Procédé selon la revendication 1 ou 2, dans lequel le $\overline{M}_w$ de la résine est compris entre 700 et 1100.

4. Procédé selon l'une quelconque des revendications 1 à 3, dans lequel la résine utilisée présente un rapport molaire KOH/phénol compris entre 0,4/1 et 0,6/1.

5. Procédé selon l'une quelconque des revendications 1 à 4, dans lequel la résine utilisée présente un rapport molaire formaldéhyde/phénol compris entre 1,5/1 et 2,2/1.

6. Procédé selon l'une quelconque des revendications 1 à 5, dans lequel la matière réfractaire granulée est mélangée avec 1 à 3% de liant.

7. Procédé selon l'une quelconque des revendications 1 à 6, dans lequel le mélange est traité par un formiate d'alkyle C$_1$—C$_3$ gazeux en une quantité comprise entre 5 et 60% en poids par rapport au poids de la solution de la résine.

8. Procédé selon la revendication 7, dans lequel le mélange est traité par un formiate d'alkyle C$_1$—C$_3$ gazeux en une quantité comprise entre 15 et 35% en poids par rapport au poids de la solution de résine.

9. Procédé selon l'une quelconque des revendications 1 à 8, dans lequel le formiate d'alkyle C$_1$—C$_3$ est dispersé dans un gaz porteur.

10. Procédé selon la revendication 9, dans lequel la concentration du formiate d'alkyle C$_1$—C$_3$ dans le gas porteur est comprise entre 0,5 et 5% en volume.

11. Procédé selon l'une quelconque des revendications 1 à 10, dans lequel le formiate d'alkyle C$_1$—C$_3$ est le formiate de méthyle.

8